# EUROPÄISCHE PATENTSCHRIFT

(11) **EP 1 419 846 B1**
(45) Veröffentlichungstag und Bekanntmachung des Hinweises auf die Patenterteilung: **05.01.2011**
(21) Anmeldenummer: 03025960.0
(22) Anmeldetag: 13.11.2003
(51) Int. Cl.: B23K 26/14, B23K 35/38

(54) **Verwendung eines Schutzgasgemisches für das Laser-Hybridschweissen von Metallwerkstoffen**
Use of a protective gas for laser hybrid welding of metallic materials
Utilisation d'un gaz protecteur pour le soudage laser hybride de matériaux métalliques

(30) Priorität: 16.11.2002 DE 10253516
(43) Veröffentlichungstag der Anmeldung: 19.05.2004
(73) Patentinhaber: Air Liquide Deutschland GmbH, 40235 Düsseldorf (DE); Messer Group GmbH, 65843 Sulzbach (DE)
(72) Erfinder: Hildebrandt, Bernd, Dr., 47918 Tönisvorst (DE); Kaya, Cerkez, 47804 Krefeld (DE); Wankum, Achim, 47877 Willich (DE)
(74) Vertreter: Kahlhöfer, Hermann

(56) Entgegenhaltungen:
- EP-A- 1 160 048
- DE-A- 10 218 297
- DE-C- 10 017 845
- US-A- 3 750 049
- US-A- 5 367 137

## Beschreibung

Die Erfindung betrifft ein Schutzgasgemisch für das Laser-Hybridschweißen von Metallwerkstoffen, insbesondere von un - und niedriglegierten Stahlwerkstoffen sowie Blechen, insbesondere von Groblechen und dickwandigen Stahlbauteilen.

Bei dem auf eine Kopplung von Laserstrahlung (CO2- oder Nd:YAG-Laser) und Lichtbogen (WIG-, Plasma- oder MIG-Verfahren) beruhenden, zum Schweißen von Metallwerkstoffen, insbesondere von Aluminium- und Stahlwerkstoffen, eingesetzten Laser-Hybridschweißen bewirkt die Laserenergie eine hohe Einschweißtiefe (Tiefschweißeffekt) und hohe Schweißgeschwindigkeiten, d.h. geringe Streckenenergien (kleiner 100 J/mm pro mm Einschweißtiefe), wodurch die Wärmebelastung des Bauteils reduziert und somit ein Bauteilverzug verringert wird und damit nachträgliche Richtarbeiten entfallen können.

So ist zum Beispiel aus der EP-A-1 160 048 zum Beispiel ein Verfahren zum Laser-Hybridschweißen mit einem Schutzgasgemisch aus 70 Vol.-% und mehr Argon und/oder Helium und mindestens einem Zusatzstoff wie Wasserstoff, Sauerstoff und/oder Kohlendioxid in einem Anteil von 0 bis 30 Vol.-% bekannt.

Durch den beim Laser-Hybridschweißen gebildeten Lichtbogen wird zusätzliche Energie auf die zugängliche Oberfläche der Fügezone übertragen, wodurch eine Anschmelzung der Grundmaterialien über Wärmeleitung erfolgt. Die gebildeten Nahtquerschnitte sind entsprechend breit mit Schachtverhältnissen im Bereich von kleiner/gleich 1. Dadurch können die Werkstückqualität negativ beeinflussende Nachteile, wie beispielsweise aus Spalt und Kantenversatz resultierende Ungenauigkeiten, besser ausgeglichen sowie die Aufhärtungsneigungen durch geringere Abkühlgeschwindigkeiten verringert werden.

Die Produktivität und Wirtschaftlichkeit des Laser-Hybridschweißens und die Qualität der Schweißnähte sind u.a. auch von der Zusammensetzung des beim Laser-Hybridschweißens eingesetzten Schutzgases abhängig.

Die Auswahl des für den jeweiligen Laser-Hybridschweißprozess optimal geeigneten Schutzgases erfolgt unter dem Aspekt der Plasmabildung in Abhängigkeit von den Lasereigenschaften, wie Laserstrahlwellenlänge, -leistung bzw- intensität, der Lichtbogenstabilität und Tropfenablösung, dem spritzerfreien Werkstoffübergang und der Nahtschutzwirkung.

Die bisher beim Laser-Hybridschweißen von un - und niedriglegierten Stahlwerkstoffen eingesetzte Argon und/oder -Helium-Schutzgase führen aber bei speziellen Schweißanwendungen, wie beispielsweise beim Schweißen von Grobblechen und dickwandigen Stahlbauteilen mit einer Bauteildicke größer als 3 mm, zu keinen befriedigenden Ergebnissen hinsichtlich der Produktivität und Wirtschaftlichkeit des Schweißprozesses sowie der Schweißnahtqualität.

Der Erfindung liegt die Aufgabe zugrunde, ein Schutzgas zum Laser-Hybridschweißen von Metallwerkstoffen, insbesondere von un - und niedriglegierten Stahlwerkstoffen sowie Blechen, insbesondere von Groblechen und dickwandigen Stahlbauteilen, zu schaffen, das einen stabilen Laser- und Lichtbogenprozess mit einer störungsfreien Energieumsetzung zur Erzeugung von ein ausgewogenes Breiten- und Tiefenverhältnis aufweisenden, gleichmäßigen und porenarmenl-freien Schweißnähten bei verbesserter Produktivität und Wirtschaftlichkeit des Schweißprozesses ermöglicht.

Die erfindungsgemäße Aufgabe wird durch ein Schutzgasgemisch mit einem Volumenanteil von 96% Helium, Rest Aktivgas in Form von Sauerstoff, gelöst.

Das zum Laser-Hybridschweißen von Metallen, einsetzbare, Schutzgas besteht aus 88 - 98 Vol.-% Helium und 2 - 12 Vol.-% Sauerstoff, besonders vorteilhaft aber erfindungsgemäß aus 96 Vol-% Helium und 4 Vol.-% Sauerstoff.
Das im erfindungsgemäßen Schutzgasgemisch zum Laser-Hybridschweißen von Metallwerkstoffen, insbesondere von Grobblechen und dickwandigen Stahlbauteilen mit einer Bauteildicke von größer als 3 mm, bis zu 98 Vol.-% enthaltende, die höchste Wärmeleitfähigkeit (W/cm °C) aller Schutzgaskomponenten aufweisende Helium führt zur verbesserten Einkopplung des Laserstrahls und einer höheren Lichtbogenspannung mit einer höheren Leistungsumsetzung mit im Breiten- und Tiefenverhältnis ausgewogenen Einbränden und damit zu qualitätsgerechten Schweißnähten.

Durch die im erfindungsgemäßen Schutzgasgemisch für das Laser-Hybridschweißen enthaltenden Aktivgas-Beimischungen von mindestens 2 Vol.-& bis maximal 12 Vol.-% Sauerstoff (02) und/oder Kohlendioxid (CO2) wird die Oberflächenspannung der Schmelze im Schmelzbad derart reduziert, dass glatte, nur minimale Einbrandkerben aufweisende, poren- und spritzerfreie Schweißnähte entstehen.

Zudem begünstigen die im erfindungsgemäßen Schutzgas enthaltenden Aktivgas-Bestandteile die Tropfenablösung beim evtl. eingesetzten Zusatzwerkstoff.

Der Einsatz des erfindungsgemäßen Schutzgases ermöglicht beim Laser-Hybridschweißen von un - und niedriglegierten Stahlwerkstoffen über die in der aufgeschmolzenen Fügezone ausgebildeten Dampfkapillare eine optimale lonisierbarkeit und hierdurch einen stabilen Lichtbogen, wodurch sich der Einsatz von leicht ionisierendes Argon im Schutzgas erübrigt.

Durch die Verwendung des erfindungsgemäßen Schutzgases beim Laser-Hybridschweißen von Metallen, wird die Produktivität und Wirtschaftlichkeit des Schweißprozesses und die Schweißqualität wesentlich verbessert.

## Patentansprüche

1. Verwendung eines Schutzgasgemisches mit einem Volumenanteil von 96 Vol.% Helium, 4 Vol.% Sauerstoff als Aktivgas, für das Laser-Hybridschweißen von un- und niedriglegierten Stahlwerkstoffen sowie von Blechen, insbesondere von Grobblechen und dickwandigen Stahlbauteilen.

## Claims

1. Use of a protective gas mixture with a volumetric content of 96% vol. helium, 4% vol. oxygen as active gas, for laser hybrid welding none-alloy and low-alloy steel material and panel sheets, in particular heavy plates and thick-walled steel parts.

## Revendications

1. Utilisation d'un mélange de gaz protecteur avec une fraction volumique de 96 % vol. de hélium, 4 % vol. d'oxygène comme gaz actif, pour le soudage laser hybride de matériaux d'acier non alliés et faiblement alliés ainsi que de tôles, notamment de tôles fortes et de pièces de construction en acier à paroi épaisse.
